(19) Europäisches Patentamt / European Patent Office / Office européen des brevets

(11) **EP 3 073 762 B1**

(12) **EUROPEAN PATENT SPECIFICATION**

(45) Date of publication and mention
of the grant of the patent:
**12.02.2025  Bulletin 2025/07**

(21) Application number: **14861647.7**

(22) Date of filing: **11.11.2014**

(51) International Patent Classification (IPC):
*H04R 1/44* *(2006.01)*      *B32B 7/02* *(2019.01)*
*B63B 49/00* *(2006.01)*      *G01S 7/521* *(2006.01)*

(52) Cooperative Patent Classification (CPC):
**G01S 7/521; B32B 7/022; B32B 25/08;
B32B 27/20; B63B 49/00; H04R 1/44;**
B32B 2250/05; B32B 2262/106; B32B 2307/10;
B32B 2307/51; B32B 2605/12

(86) International application number:
**PCT/JP2014/079853**

(87) International publication number:
**WO 2015/072455 (21.05.2015 Gazette 2015/20)**

(54) **SOUND-TRANSMITTING MEMBER**

KLANGÜBERTRAGENDES ELEMENT

ÉLÉMENT DE TRANSMISSION DU SON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **18.11.2013  JP 2013237556**

(43) Date of publication of application:
**28.09.2016  Bulletin 2016/39**

(73) Proprietor: **The Yokohama Rubber Co., Ltd.
Hiratsuka-shi, Kanagawa 254-8601 (JP)**

(72) Inventors:
• **TADOKORO, Masato
Hiratsuka-shi Kanagawa 254-8601 (JP)**
• **TANAKA, Yusuke
Hiratsuka-shi
Kanagawa 254-8601 (JP)**

(74) Representative: **Dilg, Haeusler, Schindelmann
Patentanwaltsgesellschaft mbH
Leonrodstraße 58
80636 München (DE)**

(56) References cited:
**EP-A2- 0 274 685      JP-A- 2012 154 791
JP-A- H0 450 683      JP-A- H01 126 578
JP-A- H02 254 387      JP-U- S6 114 391
US-A- 3 330 376      US-A- 4 997 705
US-B1- 6 831 876**

• **TOSHIYUKI NAKANISHI: "An acoustic window
with low transmission loss made of three
polymer plastic layers", JOURNAL OF THE
ACOUSTICAL SOCIETY OF JAPAN, vol. 46, no. 3,
1 March 1990 (1990-03-01), pages 205 - 211,
XP008183212**

**Description**

Technical Field

The present invention relates to a sound-transmitting member having sound-transmitting properties.

Background Art

Conventionally, sound-transmitting members having sound-transmitting properties have been used for a sound-transmitting region of a device such as a marine sonar. A member formed of steel is a typical example of a conventional sound-transmitting member, but rubber sound-transmitting members such as rubber domes or rubber windows are known as an improved structure for the conventional sound-transmitting members. Such conventional sound-transmitting members are essentially single-layer structures with excellent sound-transmitting characteristics in the low frequency region of a few kHz or less, but are difficult to use in a high frequency band of 20 kHz or greater.

In US 4 997 705 A, a sound-transmitting member that employs a sandwich structure in which both surfaces of a core layer are covered by skin layers is disclosed.

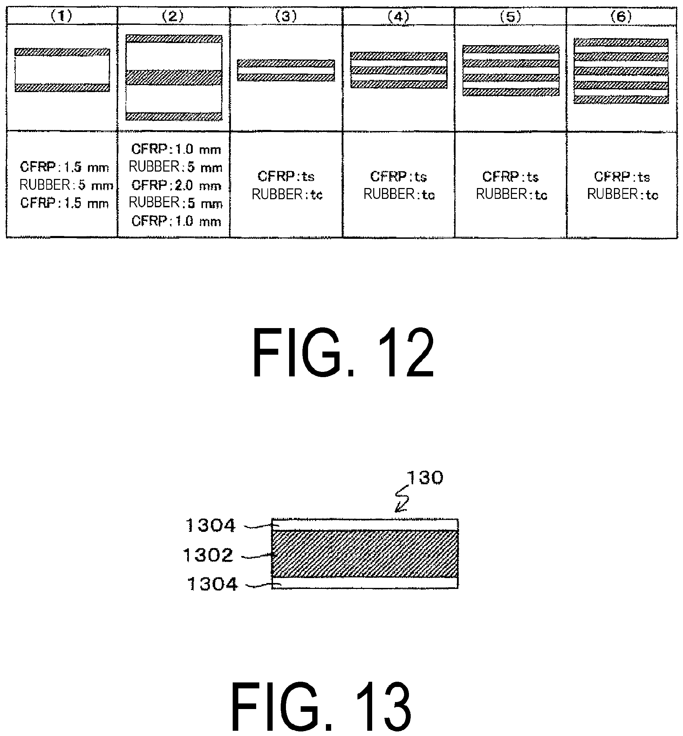

FIG. 13 is an explanatory drawing illustrating a structure of a sound-transmitting member according to a conventional technology. In a sound-transmitting member 130 illustrated in FIG. 13, natural rubber having a thickness of 5 mm is used for the core layer 1302, and carbon fiber reinforced plastics (CFRP) having a thickness of 2 mm is used for the skin layers 1304.

According to this structure, it is possible to form a sound-transmitting member that transmits, in addition to frequencies of the low frequency region where conventional sound-transmitting members can attain sound-transmitting properties, a frequency f that satisfies formulae (5) and (6) below. In formulae (5) and (6) below, dc denotes the thickness of the core layer 1302, C denotes the sound velocity in the core layer 1302, and C0 denotes the sound velocity in a surrounding fluid.

[Formula 1]

$$dc = \frac{\lambda}{2} \cdot \frac{c_0}{c} \qquad \cdots (5)$$

$$f = \frac{c_0}{\lambda} \qquad \cdots (6)$$

US 6 831 876 B1 discloses a sound transmitting member comprising at least one core layer and at least two septa, with the core layer being a material having a generally low acoustic impedance. The septa are composed of at least one ply of a metal, a plastic, a graphite fiber reinforced epoxy composition, and combinations thereof.

US 3 330 376 A discloses a structure acoustically transparent for compressional waves and acoustically damped for bending or flexural waves.

Summary of Invention

Technical Problem

A viscoelastic member such as rubber or urethane is used for the core layer of the conventional structure illustrated in FIG. 13. Such a viscoelastic member has temperature characteristics, and depending on the change in temperature, the sound velocity in the viscoelastic member (C in the above-described formula (5)) also changes. The sound velocity in the surrounding fluid (C0 in the above-described formula (5)) also changes depending on the temperature. As a result, the frequency f indicated in the above-described formula (6) shifts due to the temperature, resulting in a large impact on system performance.

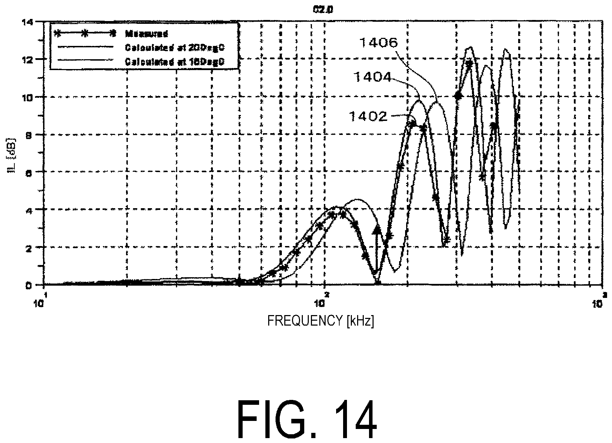

FIG. 14 is a graph showing transmission characteristics of the sound-transmitting member illustrated in FIG. 13.

In FIG. 14, the vertical axis indicates transmission loss IL, and the horizontal axis indicates frequency. In the graph, the reference sign 1402 indicates values attained by actually measuring sound-transmitting characteristics of the sound-transmitting member illustrated in FIG. 13 in 20°C water. The reference sign 1404 indicates calculated values attained by modeling sound-transmitting characteristics in 20°C water according to the actually measured values indicated by the reference sign 1402, and the reference sign 1406 indicates values attained by calculating the sound-transmitting characteristics in 16°C water on the basis of the calculated values indicated by the reference sign 1404.

It is estimated that a temperature change by 4°C from 20°C to 16°C causes the sound velocity to change by 15%, and as a result, it is estimated that a window region of a high frequency region shifts by 15% as indicated by the reference signs 1404 and 1406. For example, the transmission loss at a frequency of 150 kHz indicated by the arrow in FIG. 14 is 0.6 dB (1 dB or less) at a water temperature of 20°C, but increases to 3.5 dB at a water temperature of 16°C.

Accordingly, the conventional technology is capable of expanding the transmission bandwidth in the sound-transmitting member, but cannot attain a practically sufficient bandwidth in the high frequency region.

In light of the above-described problem of the conventional technology, an object of the present invention is to provide a sound-transmitting member in which a wide sound-transmitting band can be attained in a high frequency region.

Solution to Problem

In order to solve the above-mentioned problem and achieve the object of the present invention, a sound-transmitting member according to the invention described in claim 1 of the present invention having sound-transmitting properties includes two skin layers, two core layers, and one intermediate layer. In such a sound-transmitting member, the core layer and the intermediate layer are alternately stacked between the skin layers, and the skin layer and the intermediate layer are formed of a material having a higher elastic modulus than the core layers. The thickness of the intermediate layer is 2.0 mm, the thickness of the skin layer is 1.0 mm, and the thickness of the core layer is 10.5 mm.

In the sound-transmitting member according to the invention, a prescribed sound frequency band may be set as a transmission frequency band, and a thickness dc of the core layers satisfies the following formulae (1) and (2) with respect to a maximum frequency fm of the transmission frequency band and a wavelength λm of a sound wave at the maximum frequency fm.

[Formula 2]

$$\frac{d_c}{\lambda_m} < 0.4 \qquad \cdots(1)$$

$$\frac{d_c}{\lambda_m} < 2 - 0.24 \log_{10}(f_m) \qquad \cdots(2)$$

In the sound-transmitting member according to the invention described in claim 2, the skin layers and the intermediate layer are formed of a material having an elastic modulus of from 100 MPa to 350 GPa, both inclusive.

In the sound-transmitting member according to the invention described in claim 3, the skin layers and the intermediate layer are formed of any one of fiber reinforced plastic, plastic, and metal.

In the sound-transmitting member according to the invention described in claim 4, the core layers are formed of a viscoelastic member or plastic.

In the sound-transmitting member according to the invention described in claim 5, the core layers are formed of the viscoelastic member or the plastic into which glass microballoons are mixed such that a density and elastic modulus thereof are at prescribed values.

In the sound-transmitting member according to the invention described in claim 6, a difference between a sound impedance of a material forming the core layers and a sound impedance of a fluid surrounding the sound-transmitting member is 50% or less of the sound impedance of the material forming the core layers.

In the sound-transmitting member according to the invention described in claim 7, protective layers are formed on surfaces of the two skin layers, the surfaces being opposite to surfaces of the skin layers facing the core layers.

Advantageous Effects of Invention

According to the invention described in claim 1, a plurality of core layers which are damping layers are provided, which suppresses oscillation, thereby enabling a reduction in noise due to, for example, oscillation in a device or the like in which the sound-transmitting member is used, and a suppression of noise in the surrounding fluid. Therefore, it is possible to improve the performance of a device or the like that uses the sound-transmitting member.

According to the invention described in claim 2, it is possible to form the skin layer and the intermediate layer of various materials.

According to the invention described in claim 3, it is possible to attain excellent sound-transmitting characteristics while ensuring strength of the sound-transmitting member.

According to the invention described in claim 4, it is possible to attain excellent sound-transmitting characteristics while ensuring strength of the sound-transmitting member.

According to the invention described in claim 5, it is possible to form the core layer having any density and elastic modulus.

According to the invention described in claim 6, it is possible to reduce reflection at the boundary and improve sound-transmitting characteristics. According to the invention described in claim 7, it is possible to use the protective layer to reduce the effect of pressure from the surrounding fluid and the effect of marine organisms, and improve the strength of the sound-transmitting member.

Brief Description of Drawings

| | |
|---|---|
| FIG. 1 | is an explanatory drawing illustrating a configuration of a marine sonar device 20 equipped with a sound-transmitting member. |
| FIG. 2 | is an explanatory drawing illustrating a configuration of a sound-transmitting member 10 according to an embodiment of the invention. |
| FIG. 3 | is a graph showing sound-transmitting characteristics of the sound-transmitting member 10 illustrated in FIG. 2. |
| FIG. 4 | is a graph showing the relationship between the ratio of the thickness dc of a core layer to a wavelength λm of a sound wave at a threshold frequency fm, and the threshold frequency fm. |
| FIG. 5 | is a graph showing the sound-transmitting characteristics for when the thicknesses of the skin layer and the intermediate layer are equal, an embodiment not included in the scope of the appended claims. |
| FIG. 6 | is a graph showing the relationship between the thickness dc of the core layer and the threshold frequency fm for when the thicknesses of the skin layer and the intermediate layer are equal, an embodiment not included in the scope of the appended claims. |
| FIGS. 7A and 7B | show a graph of a comparison of sound-transmitting characteristics between the sound-transmitting member 10 and members having other configurations not included in the scope of the appended claims. |
| FIGS. 8A and 8B | are explanatory drawings illustrating configurations of sound-transmitting members 30 and 40 according to an embodiment not included in the scope of the appended claims. |
| FIGS. 9A to 9D | are graphs showing sound-transmitting characteristics of the sound-transmitting members 30 and 40. |
| FIGS. 10A to 10D | are graphs showing sound-transmitting characteristics of the sound-transmitting members 30 and 40. |
| FIGS. 11A to 11D | are graphs showing sound-transmitting characteristics of the sound-transmitting members 30 and 40. |
| FIG. 12 | is an explanatory drawing illustrating structures of other sound-transmitting members according to embodiments not included in the scope of the appended claims. |
| FIG. 13 | is an explanatory drawing illustrating a structure of a sound-transmitting member according to a conventional technology. |
| FIG. 14 | is a graph showing transmission characteristics of the sound-transmitting member illustrated in FIG. 13. |

Description of Embodiments

Preferred embodiments of a sound-transmitting member according to the present invention are described below in detail with reference to the attached drawings.

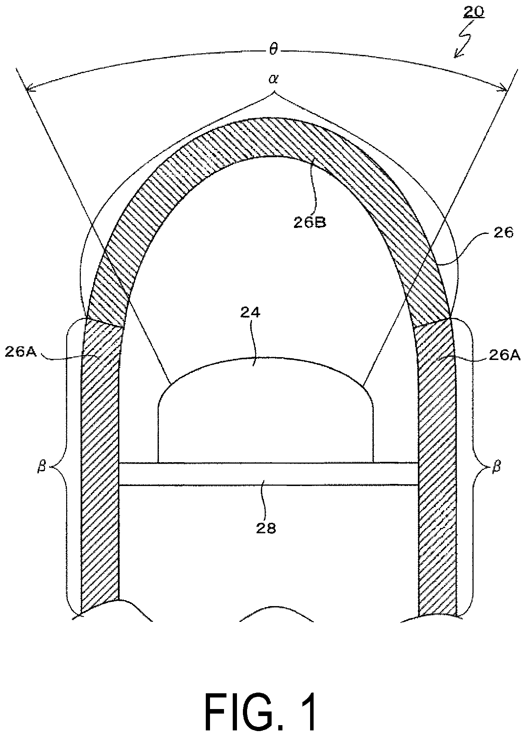

FIG. 1 is an explanatory drawing illustrating a configuration of a marine sonar device 20 equipped with a sound-transmitting member. The sound-transmitting member according to the present invention is used in order to form a sound-transmitting region α in the sonar device 20, for example.

The sonar device 20 is disposed at a leading end of a sonar device support platform (not illustrated) provided in the body of a ship.

The sonar device 20 includes a transducer 24 and an acoustic window 26. The transducer 24 is mounted on a frame 28 made of fiber reinforced plastics (FRP) supported on the inside of the acoustic window 26, and is disposed towards the front of the ship.

The acoustic window 26 is intended for protecting the transducer 24 and is provided so as to cover the transducer 24, with water filling the inside of the acoustic window 26.

The acoustic window 26 has a cylindrical portion 26A, and a curved surface portion 26B that is formed in a curved shape that protrudes toward the front from the tip of the cylindrical portion 26A.

The frame 28 on which the transducer 24 is mounted is supported on the inside of the cylindrical portion 26A.

The acoustic window 26 has the sound-transmitting region $\alpha$ that enables sound-transmitting, and a sound insulation region $\beta$ that blocks sound.

The curved surface portion 26B of the acoustic window 26 that constitutes the sound-transmitting region $\alpha$ is made of the sound-transmitting member according to the present invention.

The cylindrical portion 26A of the acoustic window 26 constituting the sound insulation region $\beta$ is constituted of a sound insulating member that blocks sound (including a reduction in oscillation noise). As such a sound insulating member, various conventionally known materials can be used such as a viscoelastic member (sound insulating material with scattered air bubbles) such as rubber or polyurethane with air bubbles (glass microballoons) mixed in, or a material in which a thin rubber plate with many small holes provided therethrough is sandwiched between thin rubber plates (air hole-type sound insulating material) from both surfaces of the thin rubber plate with many small holes provided therethrough.

In the present embodiment, the sound-transmitting region $\alpha$ is the entirety of the curved surface portion 26B excluding edge portions of the curved surface portion 26B that are located near the cylindrical portion 26A, and a range $\theta$ illustrated in FIG. 1 is the range in which the transducer 24 searches for obstacles in the front such as whales and driftwood.

Next, the sound-transmitting member constituting the sound-transmitting region $\alpha$ will be described.

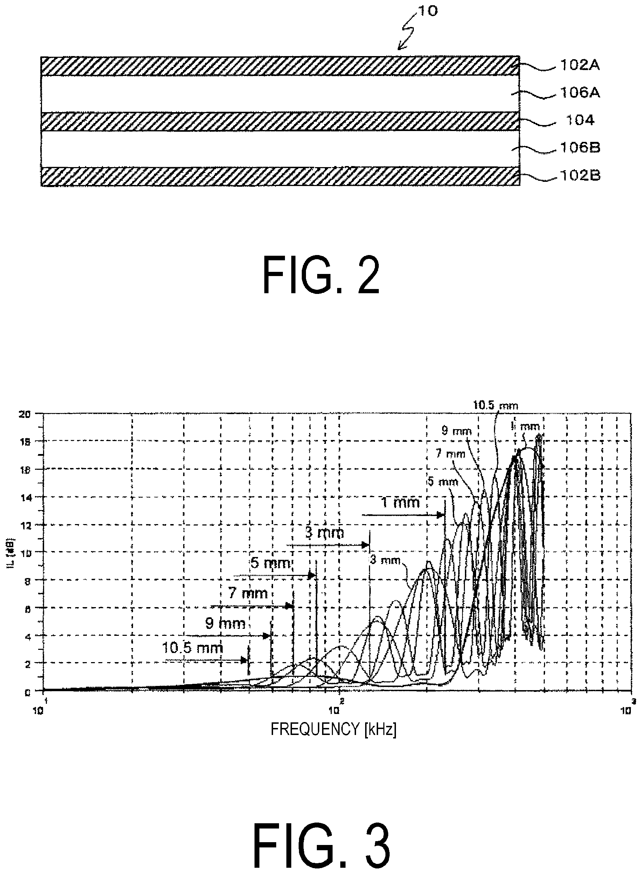

FIG. 2 is an explanatory drawing illustrating a configuration of a sound-transmitting member 10.

In the description below, for ease of explanation, the sound-transmitting member 10 is illustrated as having a planar shape, but the sound-transmitting member 10 can be molded in any shape depending on the application.

The sound-transmitting member 10 has a planar shape with sound-transmitting properties. The sound-transmitting member 10 has a transmission frequency band from a low frequency region of 100 kHz or less to a threshold frequency $fm$. The threshold frequency $fm$ is the upper limit frequency in the transmission frequency band of the sound-transmitting member 10.

The sound-transmitting member 10 includes two skin layers 102A and 102B, one intermediate layer 104, and two core layers 106A and 106B, in which the intermediate layer and the core layer are alternately stacked between the skin layers (N = 1). More specifically, the layers are stacked in the following order from the top of FIG. 2: the skin layer 102A, the core layer 106A, the intermediate layer 104, the core layer 106B, and the skin layer 102B.

Protective layers may further be provided on the surfaces of the skin layers 102A and 102B, that is, the surfaces of the two skin layers 102A and 102B opposite to the surfaces facing the core layers 106A and 106B. Such protective layers are provided in order to protect the sonar device 20 from external loads or from marine organisms, for example.

Next, the materials of the respective layers will be described.

The skin layers 102A and 102B and the intermediate layer 104 are formed of a material with a higher elastic modulus than the core layers 106A and 106B.

The skin layers 102A and 102B and the intermediate layer 104 are formed of a material with an elastic modulus of from 100 MPa to 350 GPa, both inclusive, for example. This is because the material having an elastic modulus of less than 100 MPa makes it difficult to maintain the layers as structural members, and the material having an elastic modulus of greater than 350 GPa has too high of a sound impedance.

The skin layers 102A and 102B and the intermediate layer 104 can specifically be formed of fiber reinforced plastics (FRP, specifically, glass fiber reinforced plastics (GFPP), carbon fiber reinforced plastics (CFPP), or the like), plastic, or metal (copper, titanium, or the like).

Also, the core layers 106A and 106B are formed of a viscoelastic member such as rubber or polyurethane, or plastic, for example.

The core layers 106A and 106B may be formed of the above-described viscoelastic member or plastic into which glass microballoons are mixed such that the density and elastic modulus thereof are at a prescribed value.

It is preferable that the difference in sound impedance between the material forming the core layers 106A and 106B, and the fluid (fresh water or seawater in the present embodiment) surrounding the sound-transmitting member 10 be 50% or less of the sound impedance of the material forming the core layers 106A and 106B.

The sound impedance is calculated as the product $pc$ of a material density $\rho$ and a longitudinal wave sound velocity $c$. In other words, the sound impedance of the material forming the core layers 106A and 106B is calculated as a product $\rho_1 c_1$ of a density $\rho_1$ of the material forming the core layers 106A and 106B, and the longitudinal wave sound velocity $c_1$ in the material forming the core layers 106A and 106B. The sound impedance of the fluid surrounding the sound-transmitting member 10 is calculated as a product $p_2 c_2$ of a density $\rho_2$ of the fluid surrounding the sound-transmitting member 10 and the longitudinal wave sound velocity $c_2$ in the same fluid.

It is preferable that the density and elastic modulus of the core layers 106A and 106B be adjusted such that the difference between the sound impedance $p_1 c_1$ of the material forming the core layers 106A and 106B, and the sound impedance $p_2 c_2$ of the fluid surrounding the sound-transmitting member 10 is 50% or less of the sound impedance $\rho_1 c_1$.

This is because if the difference between the sound impedance $p_1 c_1$ of the material forming the core layers 106A and 106B and the sound impedance $p_2 c_2$ of the fluid surrounding the sound-transmitting member 10 is too great, the boundary becomes highly reflective, reducing the sound-transmitting properties.

Next, the thicknesses of the respective layers will be described. The thickness dc of the core layer satisfies the following formulae (3) and (4) in relation to the threshold frequency fm, which is the maximum frequency of the transmission frequency band of the sound-transmitting member 10, and the wavelength λm of a sound wave at the threshold frequency fm.

[Formula 3]

$$\frac{d_c}{\lambda m} < 0.35 \qquad \cdots (3)$$

$$\frac{d_c}{\lambda m} < 2 - 0.25 \log_{10}(f_m) \qquad \cdots (4)$$

FIG. 3 is a graph showing sound-transmitting characteristics of the sound-transmitting member 10 illustrated in FIG. 2.

In FIG. 3, sound-transmitting characteristics are plotted for cases in which the thickness of the core layers 106A and 106B is 10.5 mm, 9.0 mm, 7.0 mm, 5.0 mm, 3.0 mm, and 1.0 mm, where the thickness of the skin layers 102A and 102B is 1.0 mm and the thickness of the intermediate layer 104 is 2.0 mm.

In the graph of FIG. 3, the vertical axis indicates transmission loss (dB), and the horizontal axis indicates frequency (kHz). In other words, each of the sound-transmitting members 10 has properties by which sounds in a frequency band with a small transmission loss are transmitted, and sounds in a frequency band with a large transmission loss are blocked.

As illustrated in FIG. 3, in the respective sound-transmitting members 10, the transmission loss in the low frequency region is small, and the transmission loss in the high frequency region periodically changes. If the "threshold frequency fm" is defined as the upper limit frequency of a band where the transmission loss changes continuously from substantially 0 dB in a low frequency region to 3 dB or less, then the thinner the core layers 106A and 106B are, the greater the threshold frequency fm is, which expands the range with a low transmission loss.

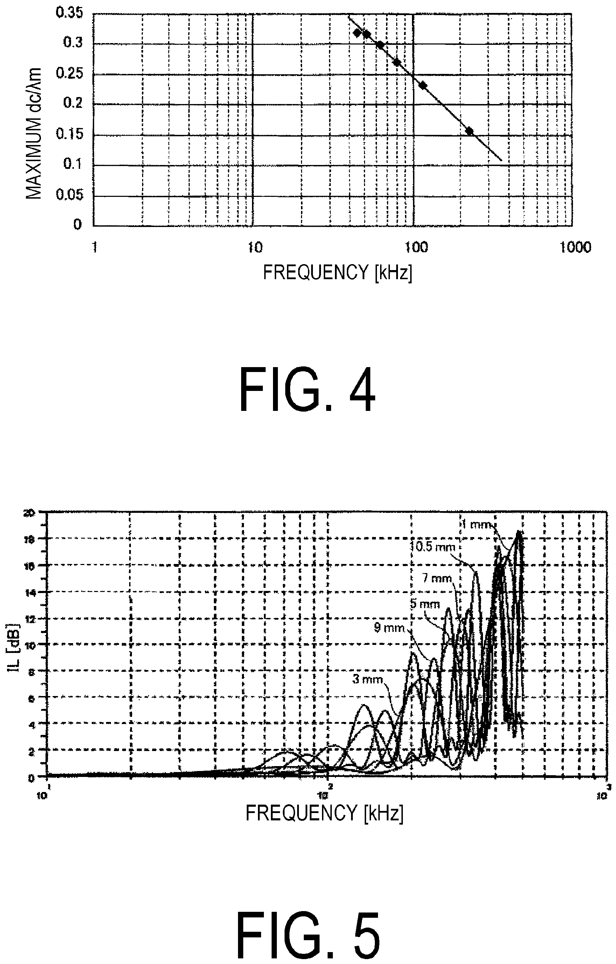

FIG. 4 is a graph showing the relationship between the ratio of the thickness dc of the core layer to a wavelength λm of a sound wave at the threshold frequency fm, and the threshold frequency fm.

The following formulae (3) and (4) are derived from the graph of FIG. 4.

[Formula 4]

$$\frac{d_c}{\lambda m} < 0.35 \qquad \cdots (3)$$

$$\frac{d_c}{\lambda m} < 2 - 0.25 \log_{10}(f_m) \qquad \cdots (4)$$

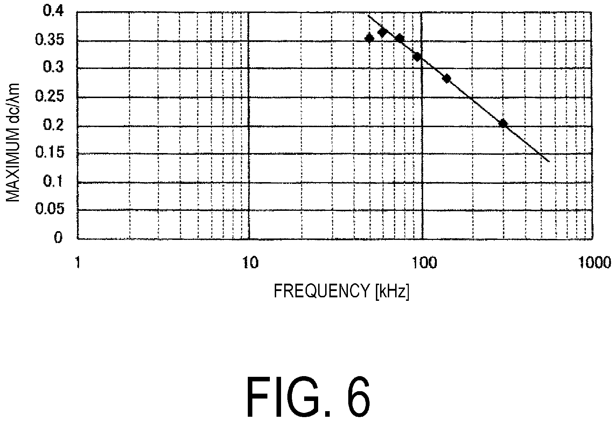

FIGS. 5 and 6 show the relationships between the sound-transmitting characteristics and thickness dc of the core layer, and between the sound-transmitting properties and the threshold frequency fm, respectively, for when the skin layers 102A and 102B are equal in thickness to the intermediate layer 104 (1.0 mm, for example), an embodiment not included in the scope of the appended claims. The graphs of FIGS. 5 and 6 are to be interpreted similarly to FIGS. 3 and 4.

If the skin layers 102A and 102B are equal in thickness to the intermediate layer 104, the coefficients of formulae (3) and (4) are changed to those of formulae (1) and (2).

[Formula 5]

$$\frac{d_C}{\lambda_m} < 0.4 \qquad \cdots (1)$$

$$\frac{d_C}{\lambda_m} < 2 - 0.24 \log_{10}(f_m) \qquad \cdots (2)$$

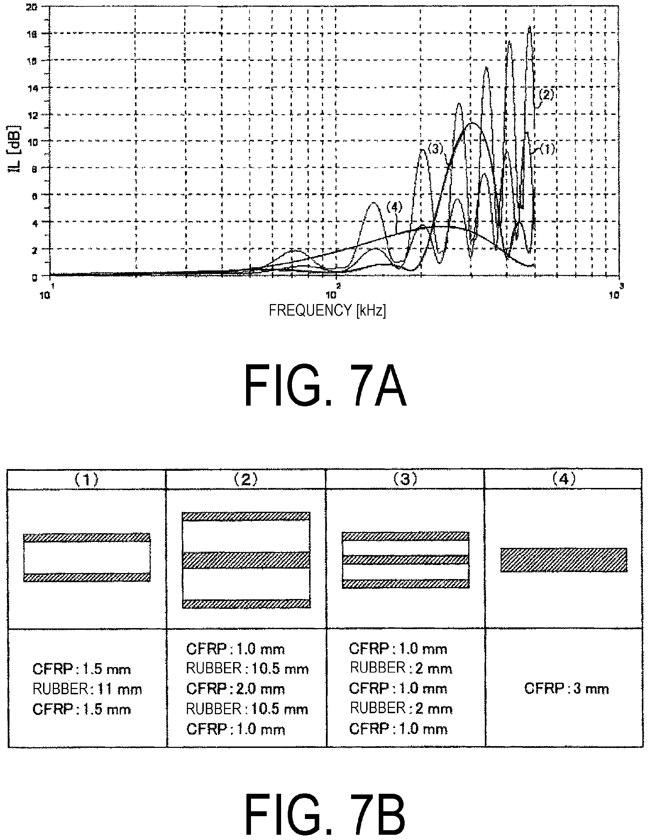

FIGS. 7A and 7B show a graph of a comparison of sound-transmitting characteristics between the sound-transmitting member 10 and members having other configurations not included in the scope of the appended claims.

The graph of FIG. 7A indicates the respective sound-transmitting characteristics of the members shown in FIG. 7B. In the sandwich structure illustrated in (1) in FIG. 7B, the core layer formed of rubber is sandwiched between skin layers formed of CFRP from both surfaces of the core layer, and the thickness of the skin layers is 1.5 mm and the thickness of the core layer is 11 mm.

The double-sandwich structure illustrated in (2) of FIG. 7B is similar to that of the sound-transmitting member 10 according to the present embodiment illustrated in FIG. 2, and in this structure, the skin layer formed of CFRP, the core layer formed of rubber, the intermediate layer formed of CFRP, the core layer formed of rubber, and the skin layer formed of CFRP are stacked in the stated order. The skin layers are 1.0 mm in thickness, the core layers are 10.5 mm in thickness, and the intermediate layer is 2.0 mm in thickness.

In (3) of FIG. 7B, a structure is illustrated in which the respective thicknesses of the layers are changed from those of the double-sandwich structure illustrated in (2), with the skin layers being 1.0 mm in thickness, the core layers being 2 mm in thickness, and the intermediate layer being 1.0 mm in thickness.

A single CFRP plate is illustrated in (4) of FIG. 7B, and this CFRP plate has the same thickness (3 mm) as the sum of the thicknesses of the skin layers and the intermediate layer (formed of CFRP) of the double-sandwich structure illustrated in (3).

When comparing the sandwich structure illustrated in (1) and the double-sandwich structure illustrated in (2), the maximum transmission loss in the high frequency region is greater in (2), but the bandwidth in the vicinity of the minimum transmission loss is greater in (2) than in (1). More specifically, when evaluating the range from the minimum transmission loss to +0.5 dB as a band where excellent sound-transmitting characteristics can be attained, the bandwidth becomes greater in (1) in the band in the vicinity of 100 kHz, and in greater frequency bands (160 kHz, 230 kHz, 300 kHz), the bandwidth becomes greater in (2), which means excellent sound-transmitting characteristics can be attained even in a high frequency region.

Also, when comparing the double-sandwich structure illustrated in (3), in which the core layer is made thin, with the structures, the threshold frequency fm in (3) exceeds 200 kHz, which means that the band in which excellent sound-transmitting characteristics can be attained is wider in (3) than in the other structures.

As described above, according to the sound-transmitting member 10, there are two core layers 106A and 106B, which are damping layers, which inhibits oscillation. This enables reduction in noise generated by, for example, oscillation of the ship, and mitigation of noise from the surrounding fluid, which allows for improvements in search accuracy by the sonar device 20.

Also, the sound-transmitting member 10 can form a sound-transmitting region (window region) that is continuous with the high frequency region, which allows for excellent sound-transmitting characteristics to be attained without being affected by changes in characteristics due to manufacturing variations of individual sound-transmitting members 10, temperature, or the like.

Because manufacturing variations of individual sound-transmitting members 10 can be taken into account as described above, manufacturing yield can be improved.

Forming the core layers 106A and 106B to be thin makes it possible to reduce the weight of the sound-transmitting member 10 and to reduce the manufacturing cost.

In an embodiment not included in the scope of the appended claims, the number of intermediate layers and core layers is increased, and N intermediate layers and N + 1 core layers are disposed between the two skin layers, the intermediate layer and the core layer being alternately stacked ($N \geq 2$).

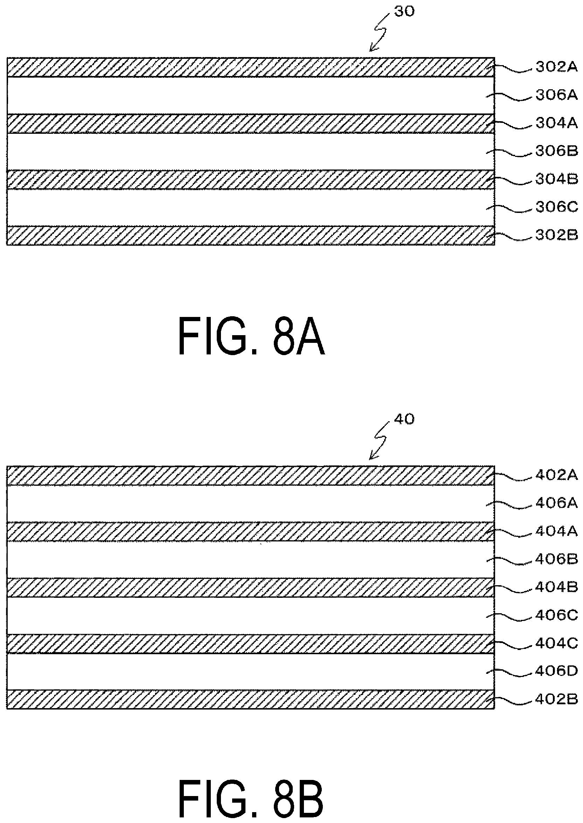

FIGS. 8A and 8B are explanatory drawings illustrating configurations of sound-transmitting members 30 and 40.

The sound-transmitting member 30 illustrated in FIG. 8A includes two skin layers 302A and 302B, two intermediate layers 304A and 304B, and three core layers 306A, 306B, and 306C, in which the intermediate layer and the core layer are alternately stacked between the skin layers (N = 2). More specifically, the layers are stacked in the following order from the top of FIG. 8A: the skin layer 302A, the core layer 306A, the intermediate layer 304A, the core layer 306B, the intermediate layer 304B, the core layer 306C, and the skin layer 302B.

Also, the sound-transmitting member 40 illustrated in FIG. 8B includes two skin layers 402A and 402B, three intermediate layers 404A, 404B, and 404C, and four core layers 406A, 406B, 406C, and 406D, in which the intermediate layer and the core layer are alternately stacked between the skin layers (N = 3). More specifically, the layers are stacked in the following order from the top of FIG. 8B: the skin layer 402A, the core layer 406A, the intermediate layer 404A, the core layer 406B, the intermediate layer 404B, the core layer 406C, the intermediate layer 404C, the core layer 406D, and the skin layer 402B.

The materials forming the respective layers are similar to those of the embodiment according to Figure 2, and the skin layers 302A, 302B, 402A, and 402B and the intermediate layers 304A, 304B, and 404A to 404C are formed of a material having a higher elastic modulus than the core layers 306A to 306C and 406A to 406D.

In the description below, the skin layers 302A, 302B, 402A, and 402B and the intermediate layers 304A, 304B, and 404A to 404C are formed of CFRP, and the core layers 306A to 306C and 406A to 406D are formed of rubber.

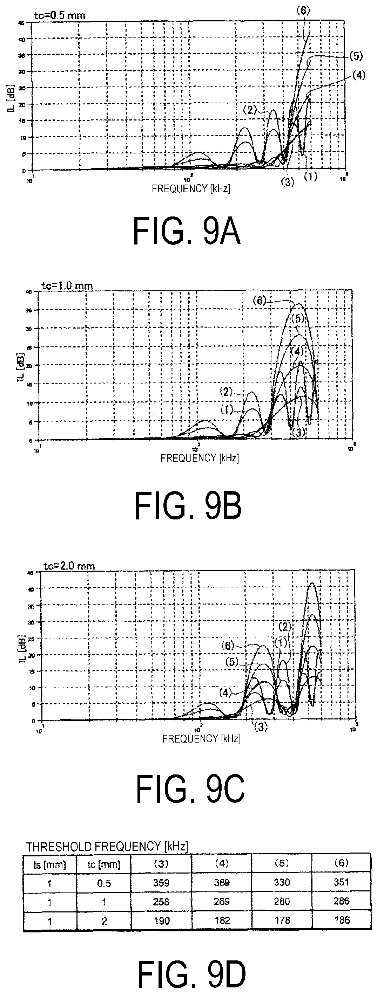

FIGS. 9A to 11D are graphs showing sound-transmitting characteristics of the sound-transmitting members 30 and 40.

FIGS. 9A to 11D show sound-transmitting characteristics of other members illustrated in FIG. 12 besides the sound-transmitting members 30 and 40 for comparison.

In FIG. 12, (5) is the sound-transmitting member 30, and (6) is the sound-transmitting member 40. The sound-transmitting characteristics shown in FIGS. 9A to 11D were calculated while changing the thicknesses of the skin layers, intermediate layers, and core layers of the sound-transmitting members 30 and 40. In FIGS. 9A to 11D, the skin layers and the intermediate layers have the same thickness ts, and the core layers have a thickness tc.

In the sandwich structure illustrated in (1) of FIG. 12, the core layer formed of rubber is sandwiched between skin layers formed of CFRP from both surfaces of the core layer, and the thickness of the skin layers is 1.5 mm and the thickness of the core layer is 5 mm.

In the double-sandwich structure illustrated in (2) of FIG. 12, the skin layer formed of CFRP, the core layer formed of rubber, the intermediate layer formed of CFRP, the core layer formed of rubber, and the skin layer formed of CFRP are stacked in the stated order. The skin layers are 1.0 mm in thickness, the core layers are 5.0 mm in thickness, and the intermediate layer is 2.0 mm in thickness.

In (3) of FIG. 12, the thickness of the sandwich structure is changed from that illustrated in (1) of FIG. 12, with the skin layers having a thickness of ts, and the core layer having a thickness of tc.

In (4) of FIG. 12, the thickness of the sandwich structure is changed from that illustrated in (2) of FIG. 12, with the skin layers and the intermediate layers having a thickness ts, and the core layers having a thickness tc.

FIGS. 9A to 9C show results of changing the thickness tc of the core layers to 0.5 mm (FIG. 9A), 1.0 mm (FIG. 9B), and 2.0 mm (FIG. 9C), with the thickness ts of the skin layers and intermediate layers being fixed to 1 mm. FIG. 9D shows the threshold frequencies fm in the respective members (3) to (6) (upper limit frequencies of a band where the transmission loss is continuously 3 dB or less from a low frequency region). In FIGS. 9A to 9C, the less the thickness tc of the core layer is, the higher the threshold frequency fm is. As the number of intermediate layers and core layers increases, the maximum transmission loss in the high frequency region becomes greater than the threshold frequency fm. On the other hand, the threshold frequency fm does not undergo major change even if the number of intermediate layers and core layers changes.

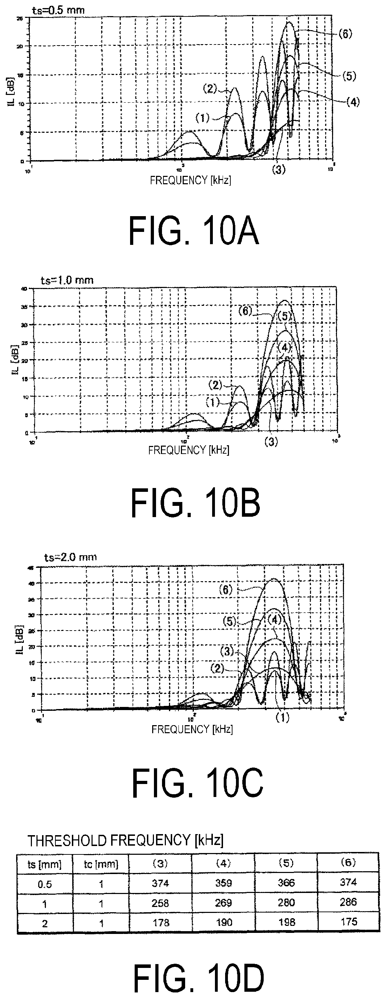

FIGS. 10A to 10C illustrate results of changing the thickness ts of the skin layers and intermediate layers to 0.5 mm, 1.0 mm, and 2.0 mm, with the thickness tc of the core layers being fixed to 1 mm. FIG. 10D shows the threshold frequencies fm of the respective members (3) to (6). In FIGS. 10A to 10C as well, the less the thickness ts of the skin layers and intermediate layers is, the higher the threshold frequency fm is. As the number of intermediate layers and core layers increases, the maximum transmission loss in the high frequency region becomes greater than the threshold frequency fm. On the other hand, the threshold frequency fm does not undergo major change even if the number of intermediate layers and core layers changes.

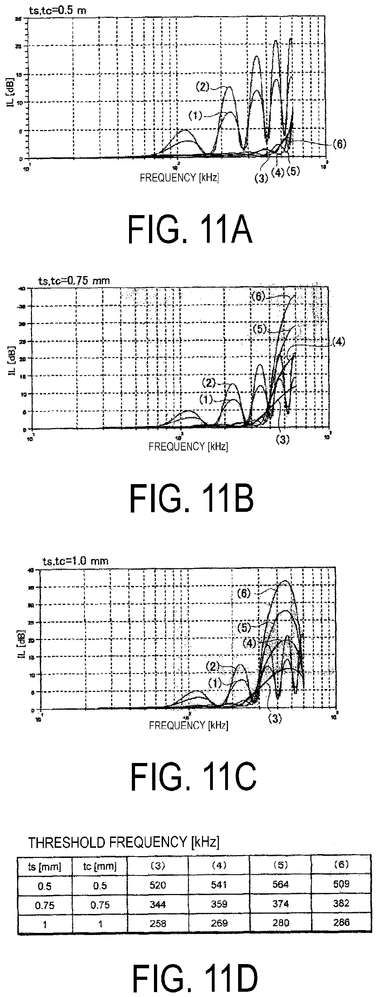

FIGS. 11A to 11C show results of changing the thickness ts of the skin layers and intermediate layers and the thickness tc of the core layers equally to 0.5 mm, 0.75 mm, and 1.0 mm. FIG. 11D shows the threshold frequencies fm of the respective members (3) to (6).

In FIGS. 11A to 11C, the less the thickness ts of the skin layers and intermediate layers and the thickness tc of the core layers are, the higher the threshold frequency fm is.

Based on FIGS. 9A to 11D, it can be seen that reducing the thickness ts of the skin layers and the intermediate layers and the thickness tc of the core layers is effective in expanding the region where the transmission loss is low in the low frequency region and increasing the threshold frequency fm.

Also, based on FIGS. 9A to 11D, it can be seen that there is little change in the value of the threshold frequency fm resulting from a change in the number of intermediate layers and core layers. Therefore, the number of intermediate layers and core layers can be set to any number according to strength requirements of the sound-transmitting member 10.

As described above, according to the sound-transmitting members 30 and 40, it is possible to attain a sound-transmitting member with desired characteristics by adjusting the number of intermediate layers and core layers according to the strength required of the sound-transmitting member, upon reducing the thicknesses of the skin layers, intermediate layers, and core layers to a degree that the threshold frequency required of the sound-transmitting member is satisfied.

Reference Signs List

10, 30, 40 Acoustic transmission member
102A, 102B, 302A, 302B, 402A, 402B Skin layer
104, 304A, 304B, 404A, 404B, 404C Intermediate layer
106A, 106B, 306A, 306B, 306C, 406A, 406B, 406C, 406D Core layer

**Claims**

1. A sound-transmitting member (10) comprising:

   two skin layers (102A, 102B);
   one intermediate layer (104), two core layers (106A, 106B);
   the core layers (106A, 106B) and the intermediate layer (104) being alternately stacked between the skin layers (102A, 102B); and
   the skin layers (102A, 102B) and the intermediate layer (104) being formed of a material having a higher elastic modulus than the core layers (106A, 106B); wherein
   the thickness of the intermediate layer (104) is 2.0 mm, the thickness of each skin layer (102A,102B) is 1.0 mm, and the thickness of each core layer (106A,106B) is 10.5 mm.

2. The sound-transmitting member (10) according to claim 1, wherein
   the skin layers (102A, 102B) and the intermediate layer (104) are formed of a material having an elastic modulus of from 100 MPa to 350 GPa, both inclusive.

3. The sound-transmitting member (10) according to any one of claims 1 or 2, wherein
   the skin layers (102A, 102B) and the intermediate layer (104) are formed of any one of fiber reinforced plastic, plastic, and metal.

4. The sound-transmitting member (10) according to any one of claims 1 to 3, wherein
   the core layers (106A, 106B) are formed of a viscoelastic member or plastic.

5. The sound-transmitting member (10) according to claim 4, wherein
   the core layers (106A, 106B) are formed of the viscoelastic member or the plastic into which glass microballoons are mixed such that a density and elastic modulus thereof are at prescribed values.

6. The sound-transmitting member (10) according to any one of claims 1 to 5, wherein
   a difference between a sound impedance of a material forming the core layers (106A, 106B) and a sound impedance of a fluid surrounding the sound-transmitting member (10, 30, 40) is 50% or less of the sound impedance of the material forming the core layers (106A, 106B).

7. The sound-transmitting member (10) according to any one of claims 1 to 6, wherein
   protective layers are formed on surfaces of the two skin layers (102A, 102B), the surfaces being opposite to surfaces of the skin layers (102A, 102B) facing the core layers (106A, 106B).

**Patentansprüche**

1. Schallübertragendes Glied (10), umfassend:

   zwei Hautschichten (102A, 102B);
   eine Zwischenschicht (104), zwei Kernschichten (106A, 106B);
   wobei die Kernschichten (106A, 106B) und die Zwischenschicht (104) zwischen den Hautschichten (102A, 102B) abwechselnd aufeinandergelegt sind; und

die Hautschichten (102A, 102B) und die Zwischenschicht (104) aus einem Material geformt sind, das einen höheren Elastizitätsmodul als die Kernschichten (106A, 106B) aufweist; wobei die Dicke der Zwischenschicht (104) 2,0 mm beträgt, die Dicke jeder Hautschicht (102A, 102B) 1,0 mm beträgt und die Dicke jeder Kernschicht (106A, 106B) 10,5 mm beträgt.

**2.** Schallübertragendes Glied (10) gemäß Anspruch 1, wobei
die Hautschichten (102A, 102B) und die Zwischenschicht (104) aus einem Material geformt sind, das einen Elastizitätsmodul von, jeweils einschließlich, 100 MPa bis 350 GPa aufweist.

**3.** Schallübertragendes Glied (10) gemäß einem der Ansprüche 1 oder 2, wobei
die Hautschichten (102A, 102B) und die Zwischenschicht (104) aus einem beliebigen von faserverstärktem Kunststoff, Kunststoff und Metall geformt sind.

**4.** Schallübertragendes Glied (10) gemäß einem der Ansprüche 1 bis 3, wobei
die Kernschichten (106A, 106B) aus einem viskoelastischen Glied oder Kunststoff geformt sind.

**5.** Schallübertragendes Glied (10) gemäß Anspruch 4, wobei
die Kernschichten (106A, 106B) aus dem viskoelastischen Glied oder dem Kunststoff, in die Glasmikroballone eingemischt sind, geformt sind, sodass eine Dichte und der Elastizitätsmodul davon auf vorgeschriebenen Werten liegen.

**6.** Schallübertragendes Glied (10) gemäß einem der Ansprüche 1 bis 5, wobei
ein Unterschied zwischen einer Schallimpedanz eines Materials, das die Kernschichten (106A, 106B) formt, und einer Schallimpedanz einer Flüssigkeit, die das schallübertragende Glied (10, 30, 40) umgibt, 50 % oder weniger der Schallimpedanz des Materials beträgt, das die Kernschichten (106A, 106B) formt.

**7.** Schallübertragendes Glied (10) gemäß einem der Ansprüche 1 bis 6, wobei
Schutzschichten auf Oberflächen der zwei Hautschichten (102A, 102B) geformt sind, wobei die Oberflächen den Oberflächen der Hautschichten (102A, 102B) gegenüberliegen, die den Kernschichten (106A, 106B) zugewandt sind.

**Revendications**

**1.** Élément de transmission du son (10) comprenant :

deux couches externes (102A, 102B) ;
une couche intermédiaire (104), deux couches centrales (106A, 106B) ;
les couches centrales (106A, 106B) et la couche intermédiaire (104) étant empilées alternativement entre les couches externes (102A, 102B) ; et
les couches externes (102A, 102B) et la couche intermédiaire (104) étant formées d'un matériau ayant un module d'élasticité plus élevé que les couches centrales (106A, 106B) ; dans lequel
l'épaisseur de la couche intermédiaire (104) est de 2,0 mm, l'épaisseur de chaque couche externe (102A, 102B) est de 1,0 mm et l'épaisseur de chaque couche centrale (106A, 106B) est de 10,5 mm.

**2.** Élément de transmission du son (10) selon la revendication 1, dans lequel
les couches externes (102A, 102B) et la couche intermédiaire (104) sont formées d'un matériau ayant un module d'élasticité compris entre 100 MPa et 350 GPa, les deux inclus.

**3.** Élément de transmission du son (10) selon l'une quelconque des revendications 1 à 2, dans lequel
les couches externes (102A, 102B) et la couche intermédiaire (104) sont formées de l'un quelconque parmi du plastique renforcé par des fibres, du plastique ou du métal.

**4.** Élément de transmission du son (10) selon l'une quelconque des revendications 1 à 3, dans lequel
les couches centrales (106A, 106B) sont formées d'un élément viscoélastique ou de plastique.

**5.** Élément de transmission du son (10) selon la revendication 4, dans lequel
les couches centrales (106A, 106B) sont formées de l'élément viscoélastique ou du plastique dans lequel des microballons de verre sont mélangés de telle sorte que leur densité et leur module d'élasticité sont à des valeurs prescrites.

6. Élément de transmission du son (10) selon l'une quelconque des revendications 1 à 5, dans lequel une différence entre une impédance acoustique d'un matériau formant les couches centrales (106A, 106B) et une impédance acoustique d'un fluide entourant l'élément de transmission du son (10, 30, 40) est inférieure ou égale à 50 % de l'impédance acoustique du matériau formant les couches centrales (106A, 106B).

7. Élément de transmission du son (10) selon l'une quelconque des revendications 1 à 6, dans lequel des couches protectrices sont formées sur les surfaces des deux couches externes (102A, 102B), les surfaces étant opposées aux surfaces des couches externes (102A, 102B) orientées vers les couches centrales (106A, 106B).

FIG. 1

# FIG. 2

# FIG. 3

# FIG. 4

# FIG. 5

# FIG. 6

FIG. 7A

| (1) | (2) | (3) | (4) |
|-----|-----|-----|-----|
| | | | |
| CFRP : 1.5 mm<br>RUBBER : 11 mm<br>CFRP : 1.5 mm | CFRP : 1.0 mm<br>RUBBER : 10.5 mm<br>CFRP : 2.0 mm<br>RUBBER : 10.5 mm<br>CFRP : 1.0 mm | CFRP : 1.0 mm<br>RUBBER : 2 mm<br>CFRP : 1.0 mm<br>RUBBER : 2 mm<br>CFRP : 1.0 mm | CFRP : 3 mm |

FIG. 7B

30

302A
306A
304A
306B
304B
306C
302B

# FIG. 8A

40

402A
406A
404A
406B
404B
406C
404C
406D
402B

# FIG. 8B

EP 3 073 762 B1

FIG. 9A

FIG. 9B

FIG. 9C

THRESHOLD FREQUENCY [kHz]

| ts [mm] | tc [mm] | (3) | (4) | (5) | (6) |
|---|---|---|---|---|---|
| 1 | 0.5 | 359 | 389 | 330 | 351 |
| 1 | 1 | 258 | 269 | 280 | 286 |
| 1 | 2 | 190 | 182 | 178 | 186 |

FIG. 9D

**FIG. 10A**

**FIG. 10B**

**FIG. 10C**

THRESHOLD FREQUENCY [kHz]

| ts [mm] | tc [mm] | (3) | (4) | (5) | (6) |
|---------|---------|-----|-----|-----|-----|
| 0.5 | 1 | 374 | 359 | 366 | 374 |
| 1 | 1 | 258 | 269 | 280 | 286 |
| 2 | 1 | 178 | 190 | 198 | 175 |

**FIG. 10D**

ts,tc=0.5 m

FIG. 11A

ts,tc=0.75 mm

FIG. 11B

ts,tc=1.0 mm

FIG. 11C

THRESHOLD FREQUENCY [kHz]

| ts [mm] | tc [mm] | (3) | (4) | (5) | (6) |
|---------|---------|-----|-----|-----|-----|
| 0.5 | 0.5 | 520 | 541 | 564 | 509 |
| 0.75 | 0.75 | 344 | 359 | 374 | 382 |
| 1 | 1 | 258 | 269 | 280 | 286 |

FIG. 11D

| (1) | (2) | (3) | (4) | (5) | (6) |
|---|---|---|---|---|---|
| CFRP:1.5 mm<br>RUBBER:5 mm<br>CFRP:1.5 mm | CFRP:1.0 mm<br>RUBBER:5 mm<br>CFRP:2.0 mm<br>RUBBER:5 mm<br>CFRP:1.0 mm | CFRP:ts<br>RUBBER:tc | CFRP:ts<br>RUBBER:tc | CFRP:ts<br>RUBBER:tc | CFRP:ts<br>RUBBER:tc |

# FIG. 12

130

1304

1302

1304

# FIG. 13

FIG. 14

**EP 3 073 762 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4997705 A
- US 6831876 B1
- US 3330376 A